(19) Europäisches Patentamt
European Patent Office
Office européen des brevets

(11) **EP 2 317 250 B1**

(12) **EUROPEAN PATENT SPECIFICATION**

(45) Date of publication and mention
of the grant of the patent:
**25.12.2019 Bulletin 2019/52**

(51) Int Cl.:
*F25B 1/10* *(2006.01)*    *F25B 1/00* *(2006.01)*
*F25B 5/00* *(2006.01)*    *F25B 49/02* *(2006.01)*
*F25B 13/00* *(2006.01)*   *F25B 49/00* *(2006.01)*

(21) Application number: **09746394.7**

(22) Date of filing: **15.05.2009**

(86) International application number:
**PCT/JP2009/002155**

(87) International publication number:
**WO 2009/139187 (19.11.2009 Gazette 2009/47)**

(54) **REFRIGERATION DEVICE**

KÜHLVORRICHTUNG

DISPOSITIF DE RÉFRIGÉRATION

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **15.05.2008 JP 2008128224**

(43) Date of publication of application:
**04.05.2011 Bulletin 2011/18**

(73) Proprietor: **Daikin Industries, Ltd.
Osaka-shi, Osaka 530-8323 (JP)**

(72) Inventor: **TAKEGAMI, Masaaki
Sakai-shi
Osaka 591-8511 (JP)**

(74) Representative: **Hoffmann Eitle
Patent- und Rechtsanwälte PartmbB
Arabellastraße 30
81925 München (DE)**

(56) References cited:
WO-A1-2008/029678    JP-A- 3 105 155
JP-A- 6 147 691      JP-A- 6 265 232
JP-A- H06 265 232    JP-A- 2001 349 623
JP-A- 2007 064 510   US-B1- 6 293 123

**Description**

TECHNICAL FIELD

The present invention relates to a refrigerating apparatus provided with a so-called economizer system, and particularly to the refrigerating apparatus capable of operating at a higher efficiency.

BACKGROUND ART

Conventionally, a refrigerating apparatus provided with a subcooling heat exchanger for enhancing the degree of refrigerant subcooling is disclosed, for example, in PATENT DOCUMENT 1. The refrigerating apparatus according to PATENT DOCUMENT 1 includes a compressor, a heat-source-side heat exchanger and a utilization-side heat exchanger, and further, a subcooling heat exchanger arranged midway along connection liquid piping. The connection liquid piping is provided with a subcooling passage connected thereto for leading a part (branched refrigerant) of a liquid refrigerant to branch and flow into the subcooling heat exchanger. The subcooling passage is provided with a subcooling expansion valve for reducing the pressure of the branched refrigerant.

In this refrigerating apparatus, the branched refrigerant subjected to a pressure reduction in the subcooling expansion valve flows into the subcooling heat exchanger and evaporates through a heat exchange with the liquid refrigerant inside of the connection liquid piping. As a result, the liquid refrigerant inside of the connection liquid piping is subcooled, thereby the quantity of heat thereof increases, and the subcooled liquid refrigerant flows into the utilization-side heat exchanger and evaporates there.

Patent Document 2 describes an air conditioner in which a refrigerant circuit performs cooling operation to have an outdoor heat exchanger functioning as a condenser for a refrigerant to be compressed by a compressor and to have indoor heat exchangers as evaporators for the refrigerant to be condensed by the outdoor heat exchanger. An outdoor expansion valve is arranged in the downstream of the outdoor heat exchanger in a flowing direction of the refrigerant in the refrigerant circuit and in the upstream of a liquid refrigerant connecting piping in cooling operation to interrupt passage of the refrigerant. A refrigerant detecting section is arranged in the upstream of the outdoor expansion valve that detects the quantity of the refrigerant that stays in the upstream of the outdoor expansion valve.

Patent Document 3 describes an air conditioning device, wherein a second pressure detective means is provided in a discharge line from a compressor and a second temperature detective means is provided at an intermediate point in a line connecting a heat exchanger and a first flow rate-controlling device. A decision is made as regards a targeted range of control of the first degree of supercooling, which is the degree of supercooling at the outlet of a heat source machine calculated from the pressure detected by a second pressure detective means and from the result of detection by a second temperature detective means. This targeted range controls a second flow rate-controlling device. Another pressure detective means and other temperature detective means also control the second flow rate-controlling device. Therefore the flow rate of the refrigerant flowing into an indoor apparatus can be controlled appropriately by a first flow-rate controller.

Patent document US 6 293 123 B1 discloses a refrigerating apparatus according to the preamble of claim 1.

CITATION LIST

PATENT DOCUMENT

PATENT DOCUMENT 1: Japanese Patent Publication No. 2006-300507
Patent Document 2: WO 2008/029678 A1
Patent Document 3: JP H06 265232 A

SUMMARY OF THE INVENTION

TECHNICAL PROBLEM

In the refrigerating apparatus according to PATENT DOCUMENT 1, the branched refrigerant which has conducted the subcooling in the subcooling heat exchanger flows to the suction side of the compressor, or the branched refrigerant is injected into the compressor from the suction side thereof. Therefore, the quantity of a refrigerant flowing from the utilization-side heat exchanger to the suction side of the compressor decreases, thereby lowering the flow rate of a refrigerant circulating through the utilization-side heat exchanger and hence hindering enhancing the cooling capacity.

Therefore, in order to prevent the reduction in the flow rate of a refrigerant circulating through the utilization-side heat exchanger, a so-called economizer system is employed which is designed such that the branched refrigerant after the subcooling in the subcooling heat exchanger is injected not into the compressor from the suction side thereof but into a compression chamber (intermediate port of the compressor) in the middle of the compression. In this case, the quantity of a refrigerant sucked into the compressor is maintained, and thereby, the flow rate of a refrigerant circulating through the utilization-side heat exchanger is kept without a fall. As a result, the cooling capacity of the utilization-side heat exchanger can be certainly enhanced by an equivalent to the subcooling given to a refrigerant in the subcooling heat exchanger. In the compressor, the quantity of a refrigerant increases by the quantity of the injection into the intermediate port to increase the work done in compression.

In addition, the refrigerating apparatus according to PATENT DOCUMENT 1 usually controls the opening of the subcooling expansion valve such that the degree of subcooling of a liquid refrigerant is kept at a constant value. In other words, the degree of subcooling of the liquid refrigerant is kept constant regardless of a cooling load in the utilization-side heat exchanger. Accordingly, for example, when the cooling load of the utilization-side heat exchanger is light, the branched refrigerant may flow excessively in quantity into the subcooling heat exchanger. Hence, in the refrigerating apparatus provided with the above economizer system, irrespective of a light cooling load, the refrigerant injected into the intermediate port of the compressor becomes larger in quantity. As a result, the work done by the compressor increases uselessly, thereby hindering saving energy.

In view of the foregoing, it is an object of the present invention to provide a refrigerating apparatus which includes an economizer system injecting a branched refrigerant which has conducted subcooling in a subcooling heat exchanger into an intermediate port of a compressor and is capable of optimizing the work done by the compressor and saving energy.

SOLUTION TO THE PROBLEM

A refrigerating apparatus according to claim 1 is provided in order to achieve the above mentioned object of the invention. The refrigerating apparatus (1) provided with a so-called economizer system according to the present invention is designed to control the subcooling temperature of a subcooling heat exchanger (28) according to the degree of a cooling load.

Specifically, a refrigerating apparatus according to a first aspect of the present invention includes: a refrigerant circuit (10) for conducting a refrigeration cycle, the refrigerant circuit (10) being formed by connecting a compressor (21a, 21b, 21c), a heat-source-side heat exchanger (25) and a utilization-side heat exchanger (53), in which the refrigerant circuit (10) includes a branch pipe (34) used for branching a liquid refrigerant inside of a liquid pipe (33) and provided with a subcooling expansion valve (29); and a subcooling heat exchanger (28) provided along the liquid pipe (33) and subcooling a liquid refrigerant inside of the liquid pipe (33) with a branched refrigerant flowing thereinto from the branch pipe (34), and the branched refrigerant after the subcooling is injected into an intermediate-pressure compression chamber of the compressor (21a, 21b, 21c). Then, the refrigerating apparatus according to the first aspect includes a controller (80) which executes a liquid-temperature control mode of determining a target temperature of the liquid refrigerant inside of the liquid pipe (33) after the subcooling according to a cooling load in the utilization-side heat exchanger (53) and controlling the opening of the subcooling expansion valve (29) such that the temperature of the liquid refrigerant inside of the liquid pipe (33) after the subcooling becomes the target temperature.

According to the first aspect, a part (branched refrigerant) of a liquid refrigerant condensed in the heat-source-side heat exchanger (25) flows to the branch pipe (34) and undergoes a pressure reduction in the subcooling expansion valve (29). The branched refrigerant which has undergone the pressure reduction flows into the subcooling heat exchanger (28) and makes a heat exchange with a liquid refrigerant inside of the liquid pipe (33), and thereby, the liquid refrigerant inside of the liquid pipe (33) is subcooled. The subcooled liquid refrigerant flows into the utilization-side heat exchanger (53) and evaporates there. In the utilization-side heat exchanger (53), the liquid refrigerant has a larger quantity of heat by an equivalent to the subcooling so that a larger cooling capacity can be obtained. On the other hand, the branched refrigerant which has conducted the subcooling is injected into an intermediate-pressure compression chamber of the compressor (21a, 21b, 21c). The temperature of the intermediate-pressure refrigerant is lower than the temperature of a gas discharged by the compressor (21a, 21b, 21c) and thereby drops the discharged-gas temperature. Hence, the refrigerant circuit (10) of the first aspect is provided with a so-called economizer system (economizer circuit).

In the refrigerating apparatus of the first aspect, the opening of the subcooling expansion valve (29) is adjusted according to the cooling load of the utilization-side heat exchanger (53), or the cooling capacity required in the utilization-side heat exchanger (53). Specifically, if the cooling load is heavy, the target temperature of the subcooled liquid refrigerant in the subcooling heat exchanger (28) is set low, while if the cooling load is light, the target temperature is set high. The opening of the subcooling expansion valve (29) is set such that it will narrow as the target temperature rises. Hence, as the cooling load becomes lighter, the opening of the subcooling expansion valve (29) is narrowed to lower the flow rate of the branched refrigerant flowing into the subcooling heat exchanger (28). Therefore, as the cooling load becomes lighter, the flow rate of the branched refrigerant injected into the compressor (21a, 21b, 21c) falls to decrease the required work of the compressor (21a, 21b, 21c). In contrast, as the cooling load becomes heavier, the opening of the subcooling expansion valve (29) is widened to heighten the flow rate of the branched refrigerant flowing into the subcooling heat exchanger (28). Therefore, as the cooling load becomes heavier, the flow rate of the branched refrigerant injected into the compressor (21a, 21b, 21c) rises to increase the required work of the compressor (21a, 21b, 21c).

According to a second aspect of the present invention, in the refrigerating apparatus of the first aspect, the controller (80) sets an operating frequency of the compressor (21a, 21b, 21c) according to a cooling load in the utilization-side heat exchanger (53) and determines the target temperature on the basis of the operating frequency of the compressor (21a, 21b, 21c).

According to the second aspect, as the cooling load of the utilization-side heat exchanger (53) becomes heavier, the operating frequency of the compressor (21a, 21b, 21c) is raised to heighten the flow rate of the refrigerant circulating through the utilization-side heat exchanger (53). Then, when the operating frequency of the compressor (21a, 21b, 21c) is high, the target temperature of the subcooled liquid refrigerant is set low, while when the operating frequency of the compressor (21a, 21b, 21c) is low, the target temperature of the subcooled liquid refrigerant is set high.

According to a third aspect of the present invention, in the refrigerating apparatus of the second aspect, the controller (80) sets a temperature higher by a predetermined value than an outdoor air temperature as a lower limit value of the target temperature.

According to the third aspect, the temperature of the subcooled liquid refrigerant becomes constantly equal to, or higher than, an outdoor air temperature. Therefore, for example, when the subcooled liquid refrigerant flows from outdoors through connection piping into the indoor utilization-side heat exchanger (53), the liquid refrigerant flowing through the connection piping is not supposed to absorb heat from outdoor air. In other words, the subcooled liquid refrigerant is not heated with the outdoor air.

According to a fourth aspect of the present invention, in the refrigerating apparatus of the second or third aspect, a plurality of the compressors (21a, 21b, 21c) are provided and connected in parallel with each other, and the controller (80) determines the target temperature on the basis of the total operating frequency of the plurality of the compressors (21a, 21b, 21c).

According to the fourth aspect, the plurality of compressors (21a, 21b, 21c) are provided in parallel with each other, and thereby, the target temperature is set based on the total value of the operating frequencies of the compressors (21a, 21b, 21c). The target temperature is set low when the total operating frequency is high while the target temperature is set high when the total operating frequency is low.

According to a fifth aspect of the present invention, in the refrigerating apparatus of any one of the first to fourth aspects, the controller (80) stops executing the liquid-temperature control mode if a refrigerant discharged from the compressor (21a, 21b, 21c) comes into an abnormal wetness state or an abnormal superheat state and executes a discharge-temperature control mode of controlling the opening of the subcooling expansion valve (29) such that the temperature of a discharge pipe of the compressor (21a, 21b, 21c) becomes a preset target temperature.

According to the fifth aspect, if the superheat of the refrigerant discharged from the compressor (21a, 21b, 21c) becomes abnormally high (abnormal superheat state) or the superheat becomes abnormally low (abnormal wetness state), the opening of the subcooling expansion valve (29) is controlled. For example, if the discharged refrigerant comes into the abnormal superheat state, the opening of the subcooling expansion valve (29) is widened to raise the flow rate of the branched refrigerant injected into the compressor (21a, 21b, 21c). In contrast, if the discharged refrigerant comes into the abnormal wetness state, the opening of the subcooling expansion valve (29) is narrowed to reduce the flow rate of the branched refrigerant injected into the compressor (21a, 21b, 21c).

ADVANTAGES OF THE INVENTION

As described above, according to the present invention, a target temperature of the subcooled liquid refrigerant is determined according to the cooling load, and then, the opening of the subcooling expansion valve (29) is controlled such that the temperature of the subcooled liquid refrigerant becomes the target temperature. Therefore, the degree of subcooling of the liquid refrigerant can be adjusted according to the cooling load. Specifically, when the cooling load is light, the flow rate of the branched refrigerant into the subcooling heat exchanger (28) is reduced to lower the degree of subcooling. In this case, the flow rate of the branched refrigerant injected into the intermediate-pressure compression chamber of the compressor (21a, 21b, 21c) falls, and hence, the flow rate of the refrigerant falls in the compressor (21a, 21b, 21c) to decrease the work done by the compressor (21a, 21b, 21c). In summary, the work done by the compressor (21a, 21b, 21c) can be suitably adjusted according to the cooling load, thereby saving energy.

Furthermore, according to the second aspect, when an operating frequency of the compressor (21a, 21b, 21c) is set according to the cooling load, the target temperature is determined based on the operating frequency. Therefore, the target temperature corresponding to the cooling load can be easily determined using the simple configuration.

Moreover, according to the third aspect, a temperature higher by a predetermined value than an outdoor air temperature is set as a lower limit value of the target temperature. Therefore, the temperature of the subcooled liquid refrigerant becomes constantly higher than an outdoor air temperature, thereby preventing the subcooled liquid refrigerant from absorbing heat from outdoor air or from being heated with the outdoor air, for example, when the subcooled liquid refrigerant flows through connection piping which connects a heat-source unit housing the compressor (21a, 21b, 21c) or the heat-source-side heat exchanger (25) and a utilization unit housing the utilization-side heat exchanger (53). Accordingly, the subcooled liquid refrigerant can be prevented from sustaining a heat loss, thereby making the operation more efficient and saving more energy.

In addition, according to the fourth aspect, the plurality of compressors (21a, 21b, 21c) are connected in parallel and the target temperature is determined on the basis of the total operating frequency of the compressors (21a, 21b, 21c). Therefore, even if the plurality of compressors (21a, 21b, 21c) are provided, the target temperature more suitable to the cooling load can be determined, thereby certainly saving energy.

Furthermore, according to the fifth aspect, the discharge-temperature control mode as well as the liquid-temperature control mode is provided, thereby making it possible to adjust the degree of subcooling of the liquid refrigerant according to the cooling load while keeping the discharged refrigerant from abnormally coming into a wetness state or a superheat state. As a result, the reliability can be improved.

BRIEF DESCRIPTION OF THE DRAWINGS

[FIG. 1] FIG. 1 is a piping system diagram showing a configuration of a refrigerating apparatus according to an embodiment of the present invention.
[FIG. 2] FIG. 2 is a piping system diagram showing a refrigerant flow in a cooling operation according to the embodiment.
[FIG. 3] FIG. 3 is a Mollier chart showing a refrigerant state in a refrigerant circuit.
[FIG. 4] FIG. 4 is a flow chart showing a control operation executed by a controller.
[FIG. 5] FIG. 5 is a flow chart showing a control operation in a first control mode executed by the controller.
[FIG. 6] FIG. 6 is a flow chart showing a control operation in a second control mode executed by the controller.
[FIG. 7] FIG. 7 is a graphical representation showing the second control mode of the controller.

DESCRIPTION OF EMBODIMENTS

Embodiments of the present invention will be below described in detail with reference to the drawings.

<Overall Configuration>

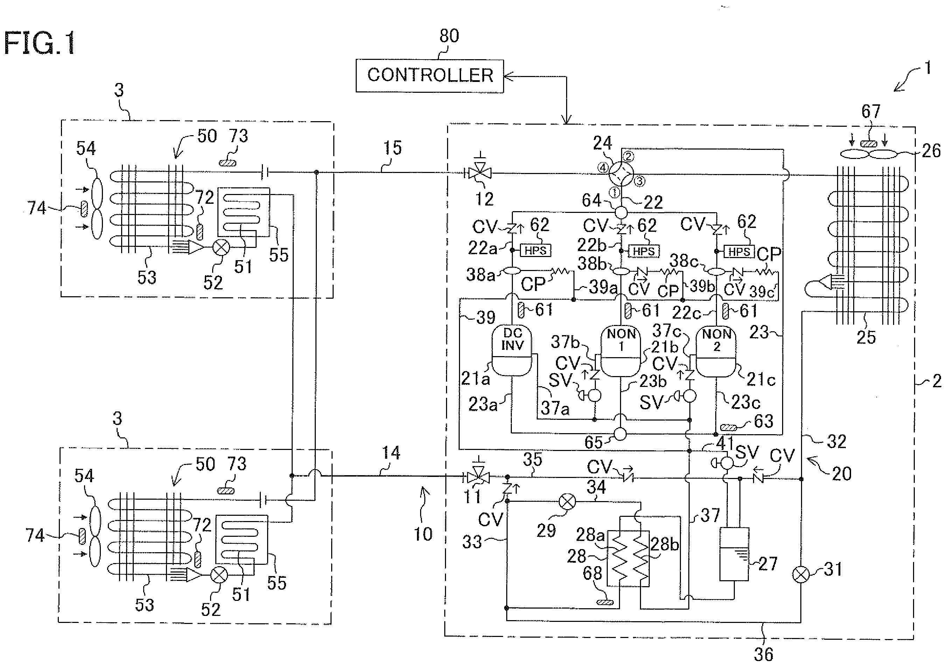

As shown in FIG. 1, a refrigerating apparatus (1) according to an embodiment of the present invention includes: an outside cabinet unit (2); two inside cabinet units (3) connected to the outside cabinet unit (2), the inside cabinet units (3) being in parallel with each other; and a controller (80). The refrigerating apparatus (1) is of a so-called separate type and formed by connecting the outside cabinet unit (2) and the inside cabinet units (3) by liquid-side connection piping (14) and gas-side connection piping (15). The refrigerating apparatus (1) is designed to cool the inside of a refrigerated cabinet.

The outside cabinet unit (2) includes an outside cabinet circuit (20) and the inside cabinet units (3) each include an inside cabinet circuit (50). In the refrigerating apparatus (1), the outside cabinet circuit (20) and each inside cabinet circuit (50) connect by the connection piping (14, 15) to form a refrigerant circuit (10) for conducting a vapor-compression refrigeration cycle.

The outside cabinet circuit (20) is provided at each end part thereof with a closing valve (11, 12). One end of the liquid-side connection piping (14) is connected to the one closing valve (11) and the other end thereof branches in two directions and is connected to the liquid-side end of each inside cabinet circuit (50). One end of the gas-side connection piping (15) is connected to the other closing valve (12) and the other end thereof branches in two directions and is connected to the gas-side end of each inside cabinet circuit (50).

<Outside Cabinet Unit>

The outside cabinet circuit (20) of the outside cabinet unit (2) is provided with three compressors (21a, 21b, 21c), a four-way valve (24), an outside-cabinet heat exchanger (25), a receiver (27), a subcooling heat exchanger (28), a subcooling expansion valve (29) and an outside-cabinet expansion valve (31).

The three compressors (21a, 21b, 21c) are the variable-capacity compressor (21a), the first fixed-capacity compressor (21b) and the second fixed-capacity compressor (21c) and are connected in parallel with each other. Every compressor (21a, 21b, 21c) is formed by a hermetic high-pressure dome-type scroll compressor. Specifically, each compressor (21a, 21b, 21c) houses, in the casing thereof, mainly a scroll-type compression mechanism and an electric motor driving the compression mechanism (not shown). In each compressor (21a, 21b, 21c), a refrigerant flowing in through a suction pipe (23a, 23b, 23c) (described later) respectively and directly sucked into a compression chamber of the compression mechanism is compressed, thereafter discharged once into the inner space of the casing, and then, flows out through a discharge pipe (22a, 22b, 22c) (described later) respectively. In the variable-capacity compressor (21a), the output frequency of an inverter is changed to change the rotational speed of the electric motor, thereby making the capacity thereof variable. In each of the first fixed-capacity compressor (21b) and the second fixed-capacity compressor (21c), the electric motor operates constantly at a fixed rotational speed, thereby making the capacity thereof invariable.

The compressors (21a, 21b, 21c) are each provided on the discharge side with the discharge pipe (22a, 22b, 22c) connected thereto respectively. The discharge pipes (22a, 22b, 22c) are each provided with a check valve (CV) and are connected via a discharge joining pipe (22) to a first port of the four-way valve (24). The check valve (CV) permits only the flow of a refrigerant from each compressor (21a, 21b, 21c) toward the discharge joining pipe (22).

On the other hand, the compressors (21a, 21b, 21c) are each provided on the suction side with the suction pipe (23a, 23b, 23c) connected thereto respectively. The suction pipes (23a, 23b, 23c) are connected via a suction joining pipe (23) to a second port of the four-way valve (24).

The four-way valve (24) is connected at a third port thereof to the one end (the gas-side end) of the outside-cabinet heat exchanger (25) and at a fourth port thereof to the closing valve (12). The four-way valve (24) is designed to switch from a first state (shown by continuous lines in FIG. 1) where the first port communicates with the third port and the second port communicates with the fourth port to a second state (shown by broken lines in FIG. 1) where the first port communicates with the fourth port and the second port communicates with the third port, and vice versa.

The other end (the liquid-side end) of the outside-cabinet heat exchanger (25) is connected via a first liquid pipe (32) to the top of the receiver (27). The outside-cabinet heat exchanger (25) is a cross-fin-type fin-and-tube heat exchanger and corresponds to the heat-source-side heat exchanger. The outside-cabinet heat exchanger (25) is provided nearby with an outside cabinet fan (26) and thereby makes a heat exchange between a refrigerant inside thereof and outside cabinet air sent in by the outside cabinet fan (26). The first liquid pipe (32) is provided with a check valve (CV) permitting only the flow of a refrigerant toward the receiver (27).

The above subcooling heat exchanger (28) includes a high-pressure-side flow path (28a) and a low-pressure-side flow path (28b). The inflow end of the high-pressure-side flow path (28a) is connected to the bottom of the receiver (27) while the outflow end thereof is connected via a second liquid pipe (33) to the closing valve (11). The second liquid pipe (33) is provided with a check valve (CV) permitting only the flow of a refrigerant toward the closing valve (11). On the other hand, the inflow end of the low-pressure-side flow path (28b) is connected to the second liquid pipe (33) via a first branch pipe (34) as the branch pipe of the present invention. The first branch pipe (34) branches from the second liquid pipe (33) at a position upstream from the check valve (CV) thereof. The first branch pipe (34) is provided with the subcooling expansion valve (29) formed by an opening-variable electronic expansion valve. The outflow end of the low-pressure-side flow path (28b) is connected to the one end (inflow end) of an injection pipe (37). The subcooling heat exchanger (28) is, for example, a plate-type heat exchanger and makes a heat exchange between refrigerants flowing through the high-pressure-side flow path (28a) and the low-pressure-side flow path (28b).

The other end (the outflow end) of the injection pipe (37) branches off to three branch injection pipes (37a, 37b, 37c) which communicate with the intermediate-pressure compression chambers connected to the compressors (21a, 21b, 21c) respectively. In other words, the injection pipes (37, 37a, 37b, 37c) form an injection circuit for injecting a gas refrigerant from the subcooling heat exchanger (28) into the intermediate-pressure compression chambers in the compression mechanisms of the compressors (21a, 21b, 21c) respectively. This formation is designed as a so-called economizer system. The branch injection pipes (37b, 37c) connected to the fixed-capacity compressors (21b, 21c) respectively are each provided with a check valve (CV) and a solenoid valve (SV) in this order from the side of the compressor (21b, 21c).

The receiver (27) is arranged, as described above, between the outside-cabinet heat exchanger (25) and the subcooling heat exchanger (28) and temporarily stores a high-pressure refrigerant condensed in the outside-cabinet heat exchanger (25). To the top of the receiver (27), an end of a gas purge pipe (41) is connected and the gas purge pipe (41) is provided with a solenoid valve (SV). The other end of the gas purge pipe (41) is connected to a middle part of the injection pipe (37). When the solenoid valve (SV) is opened, the gas purge pipe (41) sends a gas refrigerant from the receiver (27) to the injection pipe (37).

An end of a second branch pipe (35) is connected between the check valve (CV) and the closing valve (11) of the second liquid pipe (33) while the other end thereof is connected to the downstream side of the check valve (CV) of the first liquid pipe (32). The second branch pipe (35) is provided with a check valve (CV) permitting only the flow of a refrigerant toward the first liquid pipe (32). Between the first liquid pipe (32) and the second liquid pipe (33) is connected a third branch pipe (36) bypassing the receiver (27) and the subcooling heat exchanger (28). Specifically, an end of the third branch pipe (36) is connected to the upstream side of the check valve (CV) of the first liquid pipe (32), while the other end thereof is connected to the upstream side of the second liquid pipe (33) from the connection part of the second liquid pipe (33) and the first branch pipe (34). The third branch pipe (36) is provided with the outside-cabinet expansion valve (31) formed by an opening-adjustable electronic expansion valve and corresponding to a heat-source-side expansion valve.

The above discharge pipes (22a, 22b, 22c) are each provided with an oil separator (38a, 38b, 38c) respectively on the upstream side of the check valve (CV). The oil separator (38a, 38b, 38c) separates refrigerating machine oil from a refrigerant discharged by the compressor (21a, 21b, 21c) respectively. To the oil separators (38a, 38b, 38c) are connected oil return pipes (39a, 39b, 39c) respectively, and the three oil return pipes (39a, 39b, 39c) join the one end (the inflow end) of an oil-return joining pipe (39). The other end (the outflow end) of the oil-return joining pipe (39) is connected to the connection part of the injection pipe (37) and the gas purge pipe (41). In other words, the oil-return joining pipe (39) communicates with the intermediate-pressure compression chamber of each compressor (21a, 21b, 21c). The oil return pipe (39a) for the variable-capacity compressor (21a) is provided with a capillary tube (CP), and the oil return pipes (39b, 39c) for the fixed-capacity compressors (21b, 21c) are each provided with a check valve (CV) and a capillary tube (CP) in this order from the side of the oil separator (38b, 38c). The check valve (CV) permits only the flow of refrigerating machine oil toward the oil-return joining pipe (39).

Each oil return pipe (39a, 39b, 39c) and the oil-return joining pipe (39) constitute an oil-return passage for returning refrigerating machine oil separated by each oil separator (38a, 38b, 38c) to the intermediate-pressure compression chamber of each compressor (21a, 21b, 21c). Hence, the refrigerating machine oil coming out of the oil separator (38a, 38b, 38c) returns to not the suction pipe (23a, 23b, 23c) but the intermediate-pressure compression chamber, thereby preventing the refrigerating machine oil from being cooled with a low-pressure refrigerant to raise the coefficient of viscosity thereof.

The above outside cabinet circuit (20) is provided with various sensors and pressure switches. Specifically, the discharge pipes (22a, 22b, 22c) are each provided with a discharge-pipe temperature sensor (61) and a high-pressure pressure switch (62). The discharge-pipe temperature sensor (61) detects the temperature of the discharge pipe (22a, 22b, 22c). The high-pressure pressure switch (62) detects a discharge pressure to stop the refrigerating apparatus (1) emergently if the discharge pressure is an abnormal high pressure. The suction joining pipe (23) is provided with a suction-pipe temperature sensor (63) detecting the temperature of the suction joining pipe (23). Then, a discharge pressure sensor (64) detecting the discharge pressure of the compressors (21a, 21b, 21c) is provided at the joining position (i.e., the inflow end of the discharge joining pipe (22)) of the discharge pipes (22a, 22b, 22c). Further, a suction pressure sensor (65) detecting the suction pressure of the compressors (21a, 21b, 21c) is provided at the joining position of the suction pipes (23a, 23b, 23c). Near the outside cabinet fan (26), an outdoor-air temperature sensor (67) is provided which detects an outdoor air temperature.

The above second liquid pipe (33) is provided with a liquid temperature sensor (68) which corresponds to a temperature detecting means for detecting the temperature of a liquid refrigerant.

<Inside Cabinet Unit>

The two inside cabinet units (3) are configured as the same and each include the inside cabinet circuit (50). The inside cabinet circuit (50) is provided with heating piping (51), an inside-cabinet expansion valve (52) and an inside-cabinet heat exchanger (53) in this order from the liquid-side end toward the gas-side end thereof.

The inside-cabinet expansion valve (52) is formed by an opening-adjustable electronic expansion valve and corresponds to a utilization-side expansion valve. The inside-cabinet heat exchanger (53) is a cross-fin-type fin-and-tube heat exchanger and corresponds to the utilization-side heat exchanger of the present invention. The inside-cabinet heat exchanger (53) is provided nearby with an inside cabinet fan (54) and thereby makes a heat exchange between a refrigerant inside thereof and inside cabinet air sent in by the inside cabinet fan (54).

The inside-cabinet heat exchanger (53) is provided below with a drain pan (55) having the heating piping (51) therein. The drain pan (55) is used for collecting dewdrops falling from the inside-cabinet heat exchanger (53). In the drain pan (55), dewdrops freeze to form a lump of ice and then the heat of a refrigerant flowing through the heating piping (51) melts the lump of ice.

The inside cabinet circuit (50) is provided with three temperature sensors. Specifically, an evaporative temperature sensor (72) detecting the evaporative temperature of a refrigerant is provided in the heat transfer tube of the inside-cabinet heat exchanger (53), a refrigerant temperature sensor (73) detecting the temperature of a gas refrigerant is provided near the gas-side end of the inside cabinet circuit (50), and an inside-cabinet temperature sensor (74) detecting an inside cabinet temperature is provided near the inside cabinet fan (54).

<Controller>

The controller (80) corresponds to a control section controlling the operation of the refrigerating apparatus (1), and specifically, controls the drive of the compressors (21a, 21b, 21c) and the fans (26, 54) and switches the variety of valves (24, 29, 31, 52, SV) or adjusts the openings thereof. Further, values detected by the above sensors (61-69, 71-74) and the high-pressure pressure switch (62) are inputted into the controller (80).

As features of the present invention, the controller (80) includes a first control mode and a second control mode as control of the opening of the subcooling expansion valve (29). The first control mode is a mode of, if the superheat of a refrigerant discharged from each compressor (21a, 21b, 21c) comes into an abnormal state, then controlling the opening of the subcooling expansion valve (29) and thereby returning the superheat of the discharged refrigerant to a normal state. The second control mode is a mode of, according to a cooling load in the inside-cabinet heat exchanger (53), controlling the opening of the subcooling expansion valve (29) and thereby adjusting the temperature of a liquid refrigerant subcooled in the subcooling heat exchanger (28). The first control mode and the second control mode correspond to the discharge-temperature control mode and the liquid-temperature control mode of the present invention, respectively. A specific control operation of the controller (80) will be later described.

-Operation-

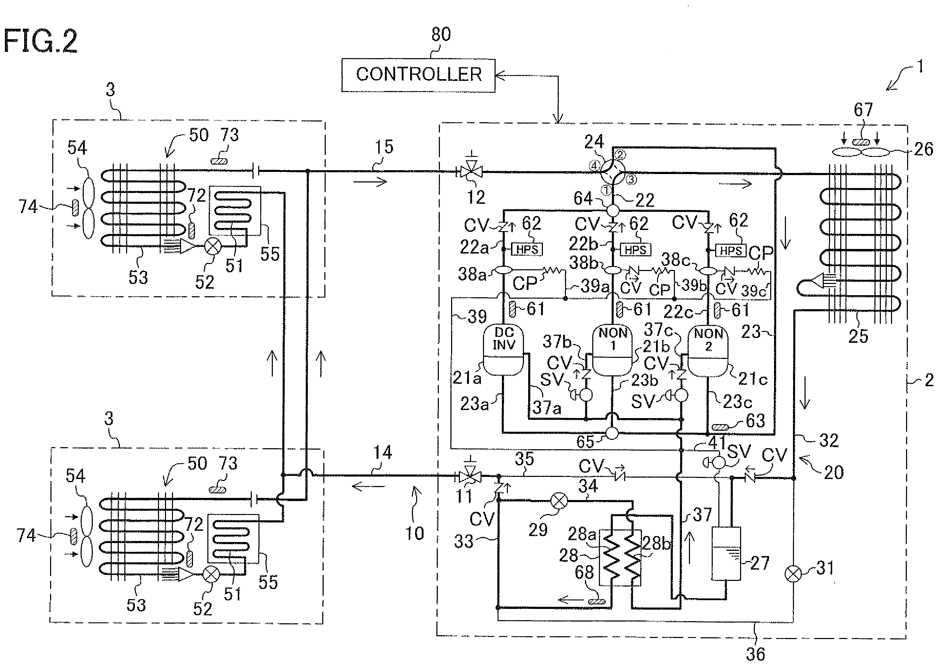

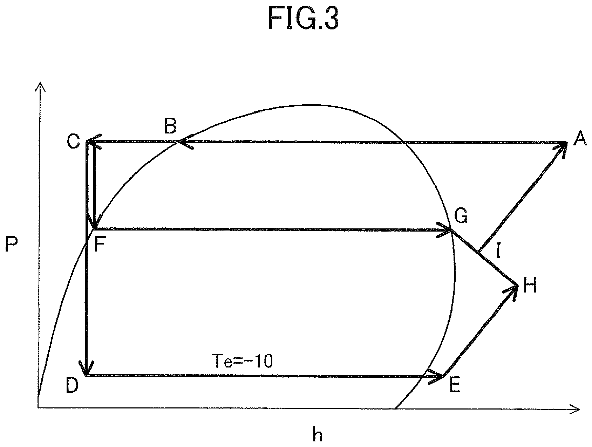

Next, an operation of the refrigerating apparatus (1) will be described with reference to FIGS. 2 and 3. The refrigerating apparatus (1) conducts a cooling operation for keeping the inside of a refrigerated cabinet at a predetermined temperature (e.g., 5 °C). At least one of the three compressors (21a, 21b, 21c) comes into operation, and thereby, each inside cabinet unit (3) cools the inside of the refrigerated cabinet.

<Cooling Operation>

In the cooling operation, at least one of the three compressors (21a, 21b, 21c) is driven, and thereby, each inside cabinet unit (3) cools the inside of the refrigerated cabinet. Here, a description will be given about the case where the three compressors (21a, 21b, 21c) are all driven. In the cooling operation, the four-way valve (24) is set to the first state (shown in FIG. 2), the openings of the subcooling expansion valve (29) and the inside-cabinet expansion valve (52) are suitably adjusted while the outside-cabinet expansion valve (31) is fully closed, and each solenoid valve (SV) is opened and closed according to the operation conditions.

In the cooling operation, a vapor-compression refrigeration cycle is conducted through the refrigerant circuit (10) in which the outside-cabinet heat exchanger (25) functions as a condenser and the inside-cabinet heat exchanger (53) functions as an evaporator. In other words, the three compressors (21a, 21b, 21c) are driven, and thereby, a refrigerant flows through the refrigerant circuit (10) in the directions shown by continuous-line arrows of FIG. 2.

Specifically, each compressor (21a, 21b, 21c) discharges a high-temperature and high-pressure gas refrigerant compressed by the compression mechanism to the discharge pipe (22a, 22b, 22c) respectively (a position A of FIG. 3). Then, the gas refrigerant inside of each discharge pipe (22a, 22b, 22c) flows into the discharge joining pipe (22). At this time, each oil separator (38a, 38b, 38c) separates refrigerating machine oil from the discharged refrigerant flowing thereinto and stores the refrigerating machine oil. The refrigerating machine oil stored in each oil separator (38a, 38b, 38c) flows into the injection pipe (37) through each three oil return pipe (39a, 39b, 39c) respectively and the oil-return joining pipe (39).

The refrigerant flowing into the discharge joining pipe (22) flows via the four-way valve (24) into the outside-cabinet heat exchanger (25). In the outside-cabinet heat exchanger (25), the refrigerant condenses through a heat exchange with outside cabinet air (a position B of FIG. 3). The condensed refrigerant flows through the first liquid pipe (32), the receiver (27) and the high-pressure-side flow path (28a) of the subcooling heat exchanger (28) in this order into the second liquid pipe (33). A part of the refrigerant flowing into the second liquid pipe (33) flows into the first branch pipe (34) and the rest flows into the liquid-side connection piping (14).

The refrigerant (the branched refrigerant) flowing into the first branch pipe (34) undergoes a pressure reduction in the subcooling expansion valve (29) and thereafter flows into the low-pressure-side flow path (28b) of the subcooling heat exchanger (28) (a position F of FIG. 3). The subcooling heat exchanger (28) makes a heat exchange between the refrigerant inside of the high-pressure-side flow path (28a) and the refrigerant (the branched refrigerant) inside of the low-pressure-side flow path (28b). Therefore, the refrigerant inside of the high-pressure-side flow path (28a) is subcooled (a position C of FIG. 3) and the refrigerant inside of the low-pressure-side flow path (28b) is evaporated (a position G of FIG. 3). The gas refrigerant evaporated in the low-pressure-side flow path (28b) flows into the injection pipe (37). Hence, the liquid refrigerant subcooled in the subcooling heat exchanger (28) flows into the liquid-side connection piping (14).

As described above, a part of the refrigerant condensed in the outside-cabinet heat exchanger (25) flows into the injection pipe (37), thereby lowering the flow rate of the refrigerant flowing into the liquid-side connection piping (14). However, the liquid refrigerant flowing into the liquid-side connection piping (14) has a larger quantity of heat by an equivalent to the subcooling, thereby preventing a decline in the cooling capacity of the inside-cabinet heat exchanger (53) described later.

The refrigerant flowing into the liquid-side connection piping (14) branches to the inside cabinet circuits (50), and the refrigerant flowing into each inside cabinet circuit (50) flows through the heating piping (51). At this time, in the drain pan (55), a lump of ice formed when dewdrops freeze is melted using the refrigerant inside of the heating piping (51). This further subcools the refrigerant flowing through the heating piping (51) (not shown in FIG. 3). The refrigerant flowing out through the heating piping (51) undergoes a pressure reduction in the inside-cabinet expansion valve (52) (a position D of FIG. 3) and thereafter flows into the inside-cabinet heat exchanger (53). In the inside-cabinet heat exchanger (53), the refrigerant evaporates through a heat exchange with inside cabinet air (a position E of FIG. 3) to cool the inside cabinet air.

The refrigerant evaporated in each inside-cabinet heat exchanger (53) flows through the gas-side connection piping (15) again into the outside cabinet circuit (20). The refrigerant flowing into the outside cabinet circuit (20) flows via the four-way valve (24) into the suction joining pipe (23) and is sucked from the suction pipes (23a, 23b, 23c) into the compressors (21a, 21b, 21c) respectively. The refrigerant sucked into the compressors (21a, 21b, 21c) is compressed and thereafter discharged again. Then, this circulation is repeated.

On the other hand, the gas refrigerant flowing into the injection pipe (37) is joined by the refrigerating machine oil flowing thereinto from the oil-return joining pipe (39). Then, the gas refrigerant flows together with the refrigerating machine oil through the branch injection pipes (37a, 37b, 37c) into the intermediate-pressure compression chambers of the compression mechanisms of the compressors (21a, 21b, 21c) respectively. Here, in the refrigerating apparatus (1), the refrigerant to be injected thereinto is designed to have a higher pressure than the refrigerant inside of each intermediate-pressure compression chamber. This facilitates the flow of the refrigerant from each branch injection pipe (37a, 37b, 37c) into the corresponding intermediate-pressure compression chamber.

In the intermediate-pressure compression chambers, the refrigerant inside of each compression chamber (a position H of FIG. 3) and the injected refrigerant (a position G of FIG. 3) mix together into the refrigerant (a position I of FIG. 3). In other words, the refrigerant inside of each intermediate-pressure compression chamber is compressed while being cooled, thereby lowering the temperature (i.e., the discharge-pipe temperature) of the refrigerant discharged from the corresponding compressor (21a, 21b, 21c).

<Operation of Controller>

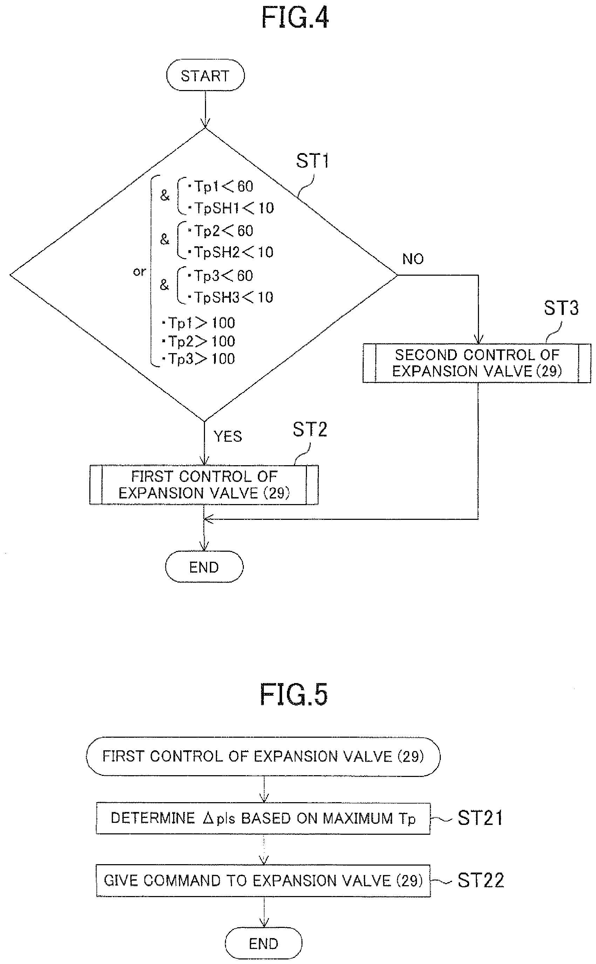

In the above operation, the controller (80) controls the opening of the subcooling expansion valve (29) on the basis of the flows of FIGS. 4-6.

First, upon starting the flow of FIG. 4, in a step ST1, a decision is made on the temperature state and superheat state of the refrigerant discharged from each compressor (21a, 21b, 21c). Specifically, in at least one of the three compressors (21a, 21b, 21c), if a discharge-pipe temperature (Tp1, Tp2, Tp3) thereof is below a predetermined value (e.g., 60 °C) and a superheat (TpSH1, TpSH2, TpSH3) of the refrigerant discharged therefrom is below a predetermined value (e.g., 10 °C), then the decision is made that the superheat of the discharged refrigerant is abnormally low (i.e., in an abnormal wetness state). In addition, in the step ST1, in at least one of the three compressors (21a, 21b, 21c), if the discharge-pipe temperature (Tp1, Tp2, Tp3) is above a predetermined value (e.g., 100 °C), the decision is made that the superheat of the discharged refrigerant is abnormally high (i.e., in an abnormal superheat state).

At the step ST1, if the decision is made that the superheat of the discharged refrigerant is abnormal (i.e., in the abnormal wetness state or in the abnormal superheat state), the processing shifts to a step ST2. On the other hand, if not, then it shifts to a step ST3.

Here, the discharge-pipe temperature (Tp1, Tp2, Tp3) is detected by the discharge-pipe temperature sensor (61), and the reference characters and numerals Tp1, Tp2 and Tp3 indicate discharge-pipe temperatures of the variable-capacity compressor (21a), the first fixed-capacity compressor (21b) and the second fixed-capacity compressor (21c), respectively. The superheat (TpSH1, TpSH2, TpSH3) of the discharged refrigerant is expressed by the difference between the saturation temperature (the pressure-corresponding saturation temperature) corresponding to the discharge pressure thereof and the discharge-pipe temperature (Tp1, Tp2, Tp3). The discharge pressure is detected by the discharge pressure sensor (64).

In the step ST2, on the basis of the flow of FIG. 5, the subcooling expansion valve (29) is controlled in the first control mode. First, in a step ST21, an opening adjustment quantity ($\Delta$pls) of the subcooling expansion valve (29) is determined on the basis of a maximum discharge-pipe temperature (Tp). Specifically, the opening adjustment quantity ($\Delta$pls) is calculated, for example, in the following formulas.

$$\text{Opening adjustment quantity } (\Delta \text{pls}) = a \times P + b \times I + c \times D$$

$$P = (\text{Tp0} - \text{MTp}) - (\text{Tp20} - \text{MTp})$$

$$I = (\text{Tp0} - \text{MTp}) + 2 \times (\text{Tp5} - \text{MTp}) + (\text{Tp10} - \text{MTp})$$

$$D = (\text{Tp0} - \text{MTp}) - 2 \times (\text{Tp10} - \text{MTp}) + (\text{Tp20} - \text{MTp})$$

Here, a, b and c are coefficients. The maximum discharge-pipe temperature (Tp) is the highest of the three discharge-pipe temperatures (Tp1, Tp2, Tp3). Then, Tp0, Tp5, Tp10 and Tp20 indicate the maximum discharge-pipe temperatures at the present time, five seconds before, ten seconds before and twenty seconds before the present time, respectively. Further, MTp is a value set in advance as a target value of the maximum discharge-pipe temperature (Tp).

In this manner, the opening adjustment quantity (Δpls) of the subcooling expansion valve (29) is determined in the first control mode such that the maximum discharge-pipe temperature (Tp) becomes the target value MTp. Then, in a step ST22, an opening change command is given to the subcooling expansion valve (29) to change the opening of the subcooling expansion valve (29) by the opening adjustment quantity (Δpls). This normalizes the superheat state of the discharged refrigerant of each compressor (21a, 21b, 21c).

For example, as the opening of the subcooling expansion valve (29) widens, the quantity of the refrigerant injected into the compressor (21a, 21b, 21c) increases to lower the discharge-pipe temperature (Tp1, Tp2, Tp3), thereby removing the abnormal superheat state of the discharged refrigerant. On the other hand, as the opening of the subcooling expansion valve (29) narrows, the quantity of the refrigerant injected into the compressor (21a, 21b, 21c) decreases to raise the discharge-pipe temperature (Tp1, Tp2, Tp3), thereby removing the abnormal wetness state of the discharged refrigerant.

The above abnormal states (the abnormal superheat state and the abnormal wetness state) of the discharged refrigerant tend to be caused, for example, when the cooling load varies sharply. Hence, the abnormal states are extremely unusual states. In other words, the decision formulas in the step ST1 of FIG. 4 are not satisfied at the time of an ordinary variation in the cooling load.

As described above, in the step ST22, the opening adjustment of the subcooling expansion valve (29) in the first control mode is completed, and thereafter, the processing returns again to the step ST1 of FIG. 4. Although the above decision process is executed in the step ST1, the superheat state of the discharged refrigerant is already normalized to shift the processing to the step ST3.

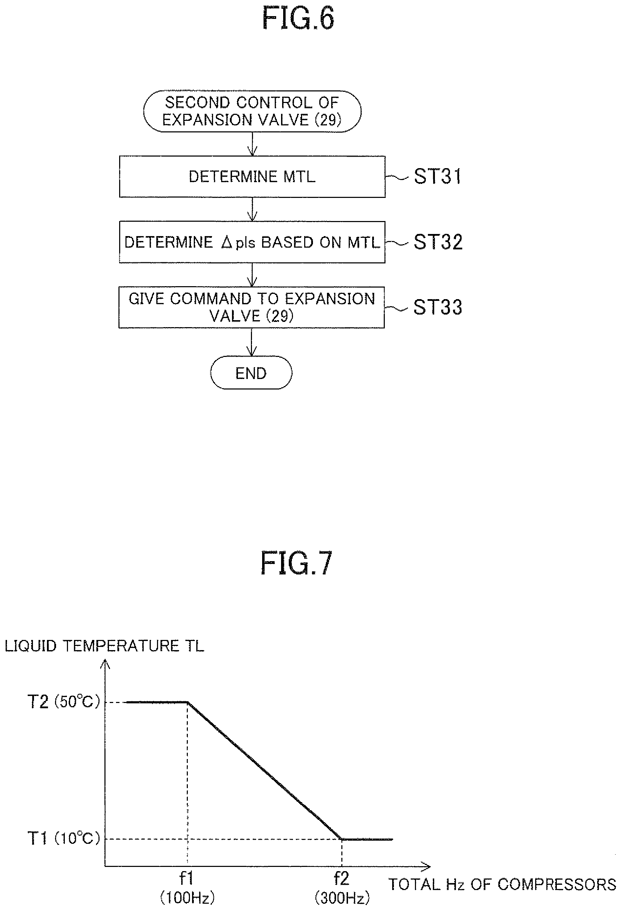

In the step ST3, on the basis of the flow of FIG. 6, the subcooling expansion valve (29) is controlled in the second control mode. First, in a step ST31, a determination is made of a target temperature (MTL) for the liquid temperature sensor (68), or a target temperature of the subcooled liquid refrigerant inside of the second liquid pipe (33). Specifically, the target temperature (MTL) is calculated, for example, in the following formula.

$$\text{Target temperature } (\text{MTL}) = \text{MIN } \{f\,(\text{HP}) - 5, \text{Automatic TL}\}$$

The formula means that the target temperature (MTL) is the lower value of the "f (HP) - 5" and the "automatic TL".

Here, the "f (HP) - 5" indicates a degree of subcooling of 5 °C (i.e., subcooling by 5 °C) and is a preset fixed value. The f (HP) indicates the saturation temperature corresponding to a discharge pressure of the compressor (21a, 21b, 21c). The degree of subcooling is arbitrarily variable, and hence, the target temperature (MTL) is constantly set to a temperature equivalent to a degree of subcooling of 5 °C or under. Therefore, the refrigerant inside of the second liquid pipe (33) certainly becomes a liquid refrigerant in the subcooling heat exchanger (28), thereby improving the controllability of the inside-cabinet expansion valve (52).

As shown in FIG. 7, the "automatic TL" is a value which varies according to the total operating frequency (below called the total Hz) of the three compressors (21a, 21b, 21c). Specifically, the "automatic TL" is inversely proportional to the total Hz if the total Hz is between a first predetermined value (f1, e.g., 100 Hz) and a second predetermined value (f2, e.g., 300 Hz). In other words, the higher the total Hz becomes, the lower the "automatic TL" becomes. In addition, the "automatic TL" is set to an upper limit value (T2, e.g., 50 °C) if the total Hz is the first predetermined value (f1) or below, while it is set to a lower limit value (T1, e.g., 10 °C) if the total Hz is the second predetermined value (f1) or above.

The lower limit value T1 corresponds to the lower limit value of the target temperature (MTL) of the present invention and is set to a temperature higher by a predetermined value (e.g., 5-10 °C) than an outdoor air temperature. Further, the "f(HP) - 5" as the degree of subcooling is set to a value higher than the lower limit value T1. Hence, the target temperature (MTL) does not become lower than the lower limit value T1 and thereby constantly becomes higher than the outdoor air temperature.

As described above, if the target temperature (MTL) is determined, the processing shifts to a step ST32. In the step ST32, the opening adjustment quantity (Δpls) of the subcooling expansion valve (29) is determined on the basis of the target temperature (MTL). The opening of the subcooling expansion valve (29) widens as the target temperature (MTL) lowers while the opening of the subcooling expansion valve (29) narrows as the target temperature (MTL) heightens. Specifically, the opening adjustment quantity (Δpls) is calculated, for example, in the following formulas.

$$\text{Opening adjustment quantity } (\Delta\text{pls}) = a \times P + b \times I + c \times D$$

$$P = (TL0 - MTL) - (TL20 - MTL)$$

$$I = (TL0 - MTL) + 2 \times (TL5 - MTL) + (TL10 - MTL)$$

$$D = (TL0 - MTL) - 2 \times (TL10 - MTL) + (TL20 - MTL)$$

Here, a, b and c are coefficients. Then, TL0, TL5, TL10 and TL20 indicate temperatures detected by the liquid temperature sensor (68) at the present time, five seconds before, ten seconds before and twenty seconds before the present time, respectively.

In this manner, the opening adjustment quantity (Δpls) of the subcooling expansion valve (29) is determined in the second control mode such that the detection temperature of the liquid temperature sensor (68) becomes the target temperature (MTL). Then, in a step ST33, an opening change command is given to the subcooling expansion valve (29) to change the opening of the subcooling expansion valve (29) by the opening adjustment quantity (Δpls). Thereafter, the processing returns again to the step ST1 of FIG. 4, and then, the above operation is repeated.

As described above, in the second control mode, the target temperature (MTL) is determined on the basis of the total Hz of the compressors (21a, 21b, 21c). In the refrigerating apparatus (1), the controller (80) sets an operating frequency of the compressors (21a, 21b, 21c) according to the cooling load (the cooling demand) of the inside-cabinet heat exchanger (53). The operating frequency is set to a higher value as the cooling load becomes heavier. This means that the cooling load of the inside-cabinet heat exchanger (53) is heavy when the total Hz of the compressors (21a, 21b, 21c) is high, while the cooling load of the inside-cabinet heat exchanger (53) is light when the total Hz of the compressors (21a, 21b, 21c) is low.

Therefore, in the second control mode described above, for example, the "automatic TL" is set to a lower value as the cooling load becomes heavier, and if the "automatic TL" is lower than the "f (HP) - 5", then the "automatic TL" becomes the target temperature (MTL). The target temperature (MTL) lowers, and thereby, the opening of the subcooling expansion valve (29) widens to raise the flow rate of the branched refrigerant in the subcooling heat exchanger (28). Hence, the degree of subcooling of the liquid refrigerant flowing through the second liquid pipe (33) rises to increase the quantity of heat of the liquid refrigerant. In other words, the position C of FIG. 3 moves leftward, thereby enhancing the cooling capacity of the inside-cabinet heat exchanger (53).

On the other hand, the "automatic TL" is set to a higher value as the cooling load becomes lighter. If the "automatic TL" is lower than the "f (HP) - 5", then the "automatic TL" becomes the target temperature (MTL), while the "automatic TL" is higher than the "f (HP) - 5", then the "f (HP) - 5" becomes the target temperature (MTL). In either case, the target temperature (MTL) becomes higher than the above case, and thereby, the opening of the subcooling expansion valve (29) narrows to lower the flow rate of the branched refrigerant in the subcooling heat exchanger (28). Hence, the degree of subcooling of the liquid refrigerant flowing through the second liquid pipe (33) falls to decrease the quantity of heat of the liquid refrigerant. In other words, the position C of FIG. 3 moves rightward, thereby lowering the cooling capacity of the inside-cabinet heat exchanger (53). In this case, the quantity of the refrigerant injected from the branch injection pipes (37a, 37b, 37c) into the compressors (21a, 21b, 21c) respectively decreases, thereby lessen the work done by the compressors (21a, 21b, 21c).

In the second control mode, the opening of the subcooling expansion valve (29) is varied, but the variation in the opening is not wide enough for the refrigerant discharged from the compressors (21a, 21b, 21c) to come into the abnormal state (the abnormal superheat state or the abnormal wetness state). In short, the discharged refrigerant is not supposed to come into the abnormal state even if the opening of the subcooling expansion valve (29) varies in the second control mode.

In addition, in the step ST31 of the second control mode, instead of the total Hz of the compressors (21a, 21b, 21c), on the basis of the relationship between a temperature of the inside of the cabinet and a set temperature thereof, the target temperature (MTL) may be determined. Specifically, the "automatic TL" is set to a lower value as the inside cabinet temperature becomes higher than the set temperature, while the "automatic TL" is set to a higher value as the inside cabinet temperature approximates the set temperature and as the inside cabinet temperature becomes lower than the set temperature. In other words, in the present invention, the cooling load of the inside-cabinet heat exchanger (53) may be judged by the relationship between the inside cabinet temperature and the set temperature.

- Advantages of Embodiment -

According to the above embodiment, the target temperature (MTL) of the subcooled liquid refrigerant is determined according to the operating frequency of the compressor (21a, 21b, 21c) or the cooling load, and then, the opening of the subcooling expansion valve (29) is controlled such that the temperature of the subcooled liquid refrigerant becomes the target temperature (MTL). Therefore, the degree of subcooling of the liquid refrigerant can be adjusted according to the cooling load. Specifically, when the cooling load is light, the flow rate of the branched refrigerant into the subcooling heat exchanger (28) is reduced to lower the degree of subcooling. In this case, the flow rate of the branched refrigerant injected from the branch injection pipe (37a, 37b, 37c) into the intermediate-pressure compression chamber of the compressor (21a, 21b, 21c) falls, thereby decreasing the work done by the compressor (21a, 21b, 21c). In summary, the compressor (21a, 21b, 21c) can be prevented from doing useless work, thereby saving energy.

In addition, the plurality of compressors (21a, 21b, 21c) are connected in parallel and the target temperature (MTL) is determined on the basis of the total operating frequency of the compressors (21a, 21b, 21c). Therefore, even if the plurality of compressors (21a, 21b, 21c) are provided, the target temperature (MTL) more suitable to the cooling load can be determined, thereby certainly saving energy.

Moreover, according to the embodiment, a temperature higher by a predetermined value than an outdoor air temperature is set as the lower limit value T1 of the target temperature (MTL). Therefore, the temperature of the subcooled liquid refrigerant becomes constantly higher than an outdoor air temperature, thereby preventing the subcooled liquid refrigerant flowing through the liquid-side connection piping (14) from absorbing heat from outdoor air. Accordingly, the refrigerant can be prevented from sustaining a heat loss in the liquid-side connection piping (14), thereby making the operation more efficient and saving more energy.

Furthermore, according to the embodiment, a decision is made whether the discharged refrigerant is in an abnormal state, and if it is in the abnormal state, then the opening of the subcooling expansion valve (29) is controlled to adjust the flow rate of a refrigerant injected into the compressor (21a, 21b, 21c). In other words, the refrigerating apparatus (1) of the embodiment is configured to have the first control mode. This makes it possible to adjust the degree of subcooling of the liquid refrigerant according to the cooling load while keeping the discharged refrigerant from abnormally coming into a wetness state or a superheat state. As a result, the reliability can be improved.

In addition, particularly, the longer the connection piping (14, 15) becomes, the greater the piping resistance becomes, thereby lowering the flow rate of the liquid refrigerant circulating through the inside-cabinet heat exchanger (53). Hence, a considerable rise in the cooling capacity of the inside-cabinet heat exchanger (53) cannot be expected, even though the quantity of heat of the liquid refrigerant increases through the subcooling. However, in the present invention, when the cooling load is heavy or when a large cooling capacity is required, the opening of the subcooling expansion valve (29) widens. This raises the flow rate of the branched refrigerant flowing into the subcooling heat exchanger (28), but lowers the flow rate of the liquid refrigerant flowing through the liquid-side connection piping (14). The fall in the flow rate of the liquid refrigerant causes a decline in the piping resistance, thereby in this case, preventing a considerable reduction in the flow rate of the liquid refrigerant circulating through the inside-cabinet heat exchanger (53). As a result, the cooling capacity of the inside-cabinet heat exchanger (53) can be certainly enhanced.

«Other Embodiments»

The above embodiment may be configured as follows.

For example, in the above embodiment, the target temperature (MTL) may be determined in any method, as long as it is a method of finally determining the target temperature (MTL) according to the cooling load.

Moreover, in the above embodiment, the two inside cabinet units (3) are provided, but the number thereof is not limited to this. The same operation and advantages can be obtained even in the case of a single unit, or three or more units.

Furthermore, in the above embodiment, the three compressors (21a, 21b, 21c) are provided in the outside cabinet circuit (20). However, the same operation and advantages can be obtained even in the case of one, two, or four or more compressors.

The above embodiments are essentially preferred illustrations, and hence, the scope of the present invention, the one applied thereto or the use thereof is not supposed to be limited.

INDUSTRIAL APPLICABILITY

As described above, the present invention is useful for a refrigerating apparatus which includes a so-called economizer system injecting a refrigerant which has subcooled a liquid refrigerant into an intermediate-pressure chamber of a compressor and conducts a vapor-compression refrigeration cycle.

DESCRIPTION OF REFERENCE CHARACTERS

| | |
|---|---|
| 1 | Refrigerating Apparatus |
| 10 | Refrigerant Circuit |
| 21a | Variable-capacity Compressor (Compressor) |
| 21b | First Fixed-capacity Compressor (Compressor) |
| 21c | Second Fixed-capacity Compressor (Compressor) |
| 25 | Outside-cabinet Heat Exchanger (Heat-source-side Heat Exchanger) |
| 28 | Subcooling Heat Exchanger |
| 29 | Subcooling Expansion Valve |
| 32 | First Liquid Pipe (Liquid Pipe) |
| 33 | Second Liquid Pipe (Liquid Pipe) |
| 34 | First Branch Pipe (Branch Pipe) |
| 53 | Inside-cabinet Heat Exchanger (Utilization-side Heat Exchanger) |
| 80 | Controller |

**Claims**

1. A refrigerating apparatus, comprising:

   a controller (80); and
   a refrigerant circuit (10) for conducting a refrigeration cycle, the refrigerant circuit (10) being formed by connecting a compressor (21a, 21b, 21c), a heat-source-side heat exchanger (25) and a utilization-side heat exchanger (53), wherein
   the refrigerant circuit (10) includes:

      a liquid pipe (33) for liquid refrigerant condensed in the heat-source-side heat exchanger (25);
      a branch pipe (34) configured to branch a part of the liquid refrigerant inside of the liquid pipe (33) and provided with a subcooling expansion valve (29); and
      a subcooling heat exchanger (28) provided along the liquid pipe (33) and configured to subcool the liquid refrigerant inside of the liquid pipe (33) by the branched refrigerant flowing into the subcooling heat exchanger (28) from the branch pipe (34); wherein the subcooled liquid refrigerant inside of the liquid pipe (33) flows into the utilization-side heat exchanger (53) to evaporate and the branched refrigerant after the subcooling is injected into an intermediate-pressure compression chamber of the compressor (21a, 21b, 21c);
      **characterized in that** the refrigerant circuit further includes temperature detecting means for detecting the temperature of the liquid refrigerant inside of the liquid pipe (33) after the subcooling, wherein
      the controller (80) is configured to execute a liquid-temperature control mode of determining a target temperature of the liquid refrigerant inside of the liquid pipe (33) after the subcooling according to a cooling load in the utilization-side heat exchanger (53) and control the opening of the subcooling expansion valve (29) such that the temperature of the liquid refrigerant inside of the liquid pipe (33) after the subcooling becomes the target temperature.

2. The refrigerating apparatus of claim 1, wherein
   the controller (80) is configured to set an operating frequency of the compressor (21a, 21b, 21c) according to a cooling load in the utilization-side heat exchanger (53) and determines the target temperature on the basis of the operating frequency of the compressor (21a, 21b, 21c).

3. The refrigerating apparatus of claim 2, wherein
the controller (80) is configured to set a temperature higher by a predetermined value than an outdoor air temperature as a lower limit value of the target temperature.

4. The refrigerating apparatus of claim 2 or 3, wherein
a plurality of the compressors (21a, 21b, 21c) are provided and connected in parallel with each other, and
the controller (80) is configured to determine the target temperature on the basis of the total operating frequency of the plurality of compressors (21a, 21b, 21c).

5. The refrigerating apparatus of any one of claims 1 to 4, wherein
the controller (80) is configured to stop executing the liquid-temperature control mode if a refrigerant discharged from the compressor (21a, 21b, 21c) comes into an abnormal wetness state or an abnormal superheat state and executes a discharge-temperature control mode of controlling the opening of the subcooling expansion valve (29) such that the temperature of a discharge pipe of the compressor (21a, 21b, 21c) becomes a preset target temperature.

**Patentansprüche**

1. Kühleinrichtung, die Folgendes umfasst:

eine Steuerung (80); und
einen Kühlkreis (10) für ein Durchführen eines Kühlzyklus, wobei der Kühlkreis (10) durch Verbinden eines Kompressors (21a, 21b, 21c), eines wärmequellenseitigen Wärmetauschers (25) und eines verbrauchsseitigen Wärmetauschers (53) gebildet ist, wobei
der Kühlkreis (10) Folgendes beinhaltet:

ein Flüssigkeitsrohr (33) für flüssiges Kältemittel, das in dem wärmequellenseitigen Wärmetauscher (25) kondensiert wird;
ein Abzweigungsrohr (34), das konfiguriert ist, um einen Teil des flüssigen Kältemittels in dem Inneren des Flüssigkeitsrohrs (33) abzuzweigen, und das mit einem Unterkühlungsexpansionsventil (29) bereitgestellt ist; und einen Unterkühlungswärmetauscher (28), der entlang des Flüssigkeitsrohrs (33) bereitgestellt und konfiguriert ist, um das flüssige Kältemittel in dem Inneren des Flüssigkeitsrohrs (33) durch das abgezweigte Kältemittel, das in den Unterkühlungswärmetauscher (28) aus dem Verzweigungsrohr (34) fließt, zu unterkühlen; wobei das unterkühlte flüssige Kältemittel in dem Inneren des Flüssigkeitsrohrs (33) in den verbrauchsseitigen Wärmetauscher (53) fließt, um zu verdampfen, und das abgezweigte Kältemittel nach dem Unterkühlen in eine Zwischendruck-Kompressionskammer des Kompressors (21a, 21b, 21c) injiziert wird, **dadurch gekennzeichnet, dass** der Kühlkreis weiter Temperaturerfassungsmittel für ein Erfassen der Temperatur des flüssigen Kältemittels in dem Inneren des Flüssigkeitsrohrs (33) nach dem Unterkühlen beinhaltet, wobei die Steuerung (80) konfiguriert ist, um einen Flüssigkeitstemperatursteuermodus eines Bestimmens einer Zieltemperatur des flüssigen Kältemittels in dem Inneren des Flüssigkeitsrohrs (33) nach dem Unterkühlen gemäß einer Kühlcharge in dem verbrauchsseitigen Wärmetauscher (53) auszuführen und das Öffnen des Unterkühlungsexpansionsventils (29) derart zu steuern, dass die Temperatur des flüssigen Kältemittels in dem Inneren des Flüssigkeitsrohrs (33) nach dem Unterkühlen die Zieltemperatur wird.

2. Kühleinrichtung nach Anspruch 1, wobei
die Steuerung (80) konfiguriert ist, um eine Betriebsfrequenz des Kompressors (21a, 21b, 21c) gemäß einer Kühlcharge in dem verbrauchsseitigen Wärmetauscher (53) einzustellen, und die Zieltemperatur auf der Basis der Betriebsfrequenz des Kompressors (21a, 21b, 21c) bestimmt.

3. Kühleinrichtung nach Anspruch 2, wobei
die Steuerung (80) konfiguriert ist, um eine Temperatur, die um einen vorbestimmten Wert höher ist als eine Außenlufttemperatur, als einen unteren Grenzwert der Zieltemperatur einzustellen.

4. Kühleinrichtung nach Anspruch 2 oder 3, wobei
eine Vielzahl der Kompressoren (21a, 21b, 21c) bereitgestellt und miteinander parallel geschaltet ist, und

die Steuerung (80) konfiguriert ist, um die Zieltemperatur auf der Basis der Gesamtbetriebsfrequenz der Vielzahl von Kompressoren (21a, 21b, 21c) zu bestimmen.

**5.** Kühleinrichtung nach einem der Ansprüche 1 bis 4, wobei die Steuerung (80) konfiguriert ist, um ein Ausführen des Flüssigkeitstemperatursteuermodus zu stoppen, falls ein Kältemittel, das aus dem Kompressor (21a, 21b, 21c) abgelassen wird, in einen anormalen Nässezustand oder einen anormalen Überhitzungszustand gerät, und einen Ablasstemperatursteuermodus eines Steuerns des Öffnens des Unterkühlungsexpansionsventils (29) derart ausführt, dass die Temperatur eines Ablassrohrs des Kompressors (21a, 21b, 21c) eine voreingestellte Zieltemperatur wird.

**Revendications**

**1.** Appareil de réfrigération, comprenant :

un dispositif de commande (80) ; et
un circuit de réfrigérant (10) pour opérer un cycle de réfrigération, le circuit de réfrigérant (10) étant formé en reliant un compresseur (21a, 21b, 21c), un échangeur de chaleur côté source de chaleur (25) et un échangeur de chaleur côté utilisation (53), dans lequel
le circuit de réfrigérant (10) inclut :

un tuyau de liquide (33) pour le réfrigérant liquide condensé dans l'échangeur de chaleur côté source de chaleur (25) ;
un tuyau de dérivation (34) configuré pour dériver une partie du réfrigérant liquide à l'intérieur du tuyau de liquide (33) et pourvu d'une soupape de détente de sous-refroidissement (29); et un échangeur de chaleur de sous-refroidissement (28) prévu le long du tuyau de liquide (33) et configuré pour sous-refroidir le réfrigérant liquide à l'intérieur du tuyau de liquide (33) au moyen du réfrigérant dérivé s'écoulant dans l'échangeur de chaleur de sous-refroidissement (28) depuis le tuyau de dérivation (34) ; dans lequel le réfrigérant liquide sous-refroidi à l'intérieur du tuyau de liquide (33) s'écoule dans l'échangeur de chaleur côté utilisation (53) pour s'évaporer et le réfrigérant dérivé après le sous-refroidissement est injecté dans une chambre de compression à pression intermédiaire du compresseur (21a, 21b, 21c), **caractérisé en ce que** le circuit de réfrigérant inclut en outre des moyens de détection de température pour détecter la température du réfrigérant liquide à l'intérieur du tuyau de liquide (33) après le sous-refroidissement, dans lequel le dispositif de commande (80) est configuré pour exécuter un mode de commande de température de liquide consistant à déterminer une température cible du réfrigérant liquide à l'intérieur du tuyau de liquide (33) après le sous-refroidissement selon une charge de refroidissement dans l'échangeur de chaleur côté utilisation (53) et commander l'ouverture de la soupape de détente de sous-refroidissement (29) de sorte que la température du réfrigérant liquide à l'intérieur du tuyau de liquide (33) après le sous-refroidissement devienne la température cible.

**2.** Appareil de réfrigération selon la revendication 1, dans lequel le dispositif de commande (80) est configuré pour régler une fréquence de fonctionnement du compresseur (21a, 21b, 21c) selon une charge de refroidissement dans l'échangeur de chaleur côté utilisation (53) et détermine la température cible sur la base de la fréquence de fonctionnement du compresseur (21a, 21b, 21c).

**3.** Appareil de réfrigération selon la revendication 2, dans lequel le dispositif de commande (80) est configuré pour régler une température à un niveau supérieur d'une valeur prédéterminée à une température de l'air extérieur en tant que valeur limite inférieure de la température cible.

**4.** Appareil de réfrigération selon la revendication 2 ou 3, dans lequel une pluralité des compresseurs (21a, 21b, 21c) sont prévus et connectés en parallèle les uns avec les autres, et le dispositif de commande (80) est configuré pour déterminer la température cible sur la base de la fréquence de fonctionnement totale de la pluralité de compresseurs (21a, 21b, 21c).

**5.** Appareil de réfrigération selon l'une quelconque des revendications 1 à 4, dans lequel le dispositif de commande (80) est configuré pour arrêter l'exécution du mode de commande de température de liquide si un réfrigérant évacué du compresseur (21a, 21b, 21c) entre dans un état d'humidité anormal ou un état de surchauffe anormal et exécute un mode de commande de température d'évacuation consistant à commander l'ouverture de la soupape de détente de sous-refroidissement (29) de sorte que la température d'un tuyau d'évacuation du compresseur (21a, 21b, 21c) devienne une température cible prédéfinie.

FIG.1

CONTROLLER

FIG.2

EP 2 317 250 B1

# FIG.3

# FIG.4

```
START
  │
  ▼
 ST1
```

$$\text{or} \begin{cases} \& \begin{cases} \cdot Tp1 < 60 \\ \cdot TpSH1 < 10 \end{cases} \\ \& \begin{cases} \cdot Tp2 < 60 \\ \cdot TpSH2 < 10 \end{cases} \\ \& \begin{cases} \cdot Tp3 < 60 \\ \cdot TpSH3 < 10 \end{cases} \\ \cdot Tp1 > 100 \\ \cdot Tp2 > 100 \\ \cdot Tp3 > 100 \end{cases}$$

NO → ST3 SECOND CONTROL OF EXPANSION VALVE (29)

YES → ST2 FIRST CONTROL OF EXPANSION VALVE (29)

END

# FIG.5

```
FIRST CONTROL OF EXPANSION VALVE (29)
  │
  ▼
DETERMINE Δpls BASED ON MAXIMUM Tp ── ST21
  │
  ▼
GIVE COMMAND TO EXPANSION VALVE (29) ── ST22
  │
  ▼
END
```

# FIG.6

```
    SECOND CONTROL OF
   EXPANSION VALVE (29)
            │
            ▼
  ┌──────────────────────┐
  │   DETERMINE MTL       │──── ST31
  └──────────────────────┘
            │
            ▼
  ┌──────────────────────────┐
  │ DETERMINE Δpls BASED ON MTL │──── ST32
  └──────────────────────────┘
            │
            ▼
  ┌──────────────────────────┐
  │ GIVE COMMAND TO EXPANSION │──── ST33
  │      VALVE (29)           │
  └──────────────────────────┘
            │
            ▼
          END
```

# FIG.7

LIQUID TEMPERATURE TL

T2 (50°C)

T1 (10°C)

f1 (100Hz)  f2 (300Hz)  TOTAL Hz OF COMPRESSORS

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6293123 B1
- JP 2006300507 A
- WO 2008029678 A1
- JP H06265232 A